# FASCICULE DE BREVET EUROPEEN

(11) **EP 2 931 754 B1**
(45) Date de publication et mention de la délivrance du brevet: **22.02.2017**
(21) Numéro de dépôt: 13802956.6
(22) Date de dépôt: 09.12.2013
(51) Int. Cl.: C08C 19/22, B60C 1/00, C08L 15/00, C08K 3/36, C08K 5/548

(54) **PNEUMATIQUE POIDS-LOURD COMPORTANT UNE BANDE DE ROULEMENT A BASE D'UN POLYISOPRENE MODIFIE, SON PROCEDE DE PREPARATION**
SCHWERLASTFAHRZEUGREIFEN MIT EINER LAUFFLÄCHE AUF BASIS VON MODIFIZIERTEM POLYISOPREN UND VERFAHREN ZUR HERSTELLUNG DAVON
HEAVY GOODS VEHICLE TYRE COMPRISING A TREAD BASED ON A MODIFIED POLYISOPRENE, PROCESS FOR PREPARING SAME

(30) Priorité: 13.12.2012 FR 1262024
(43) Date de publication de la demande: 21.10.2015
(73) Titulaire: Compagnie Générale des Etablissements Michelin, 63000 Clermont-Ferrand (FR); Michelin Recherche et Technique S.A., 1763 Granges-Paccot (CH)
(72) Inventeur: VALLAT, Perrine, F-63040 Clermont-Ferrand Cedex 9 (FR); FLEURY, Etienne, F-63040 Clermont-Ferrand Cedex 9 (FR); ARAUJO DA SILVA, José-Carlos, F-63040 Clermont-Ferrand Cedex 9 (FR); FAVROT, Jean-Michel, F-63040 Clermont-Ferrand Cedex 9 (FR); SALIT, Anne-Frédérique, F-63040 Clermont-Ferrand Cedex 9 (FR); SEEBOTH, Nicolas, F-63040 Clermont-Ferrand Cedex 9 (FR)
(74) Mandataire: Gandon-Pain, Sylvie
(86) Numéro de dépôt international: PCT/EP2013/075988
(87) Numéro de publication internationale: WO 2014/090756

(56) Documents cités:
- WO-A1-2011/113818
- WO-A1-2012/007441
- WO-A1-2012/007442
- FR-A1- 2 935 979
- US-A1- 2006 084 730

## Description

La présente invention concerne des pneumatiques adaptés pour porter de lourdes charges, et une utilisation d'une composition de caoutchouc faiblement hystérétique pour améliorer la rigidité de bandes de roulement de tels pneumatiques. L'invention s'applique à des pneumatiques pour véhicules à moteur, tels que des véhicules poids-lourds, des véhicules de génie civil ou des avions.

Dans le domaine de la fabrication des pneumatiques adaptés pour porter de lourdes charges, notamment pour véhicules poids-lourds, et en particulier dans le domaine de la formulation des compositions de caoutchouc en contact avec le sol, appelées bandes de roulement, on utilise de manière connue du caoutchouc naturel en raison des pertes hystérétiques réduites que cet élastomère présente.

Tout particulièrement pour ces pneumatiques destinés à porter de lourdes charges, on souhaite que les matériaux constituant les bandes de roulement présentent une bonne rigidité aux basses et moyennes déformations, tout en étant aptes à accepter certaines déformations sans se dégrader sous l'effet de contraintes ou déformations plus importantes qui sont amplifiées par les charges portées. Autrement dit, on souhaite disposer d'un matériau à base de caoutchouc naturel qui, tout en étant rigide aux basses et moyennes déformations, de façon à assurer une résistance au roulement faible au pneumatique, présente un allongement à la rupture ou une contrainte à la rupture élevés, de façon à assurer une résistance à l'usure satisfaisante. Toutefois, ces gains de propriétés ne doivent pas se faire au détriment du gain en hystérèse déjà réalisé avec l'utilisation du caoutchouc naturel.

La demande de brevet des Demanderesses WO 2012/007442, décrit la modification d'un élastomère diénique par greffage au moyen d'un agent de modification spécifique comprenant au moins un dipôle azoté et au moins un groupe associatif azoté. L'élastomère ainsi modifié confère à une composition le contenant des propriétés hystérétiques améliorées, ainsi qu'une bonne rigidité à moyenne déformation et un allongement à la rupture élevé.

Néanmoins, il s'avère que cette modification appliquée au caoutchouc naturel n'apporte pas les propriétés attendues. Ainsi, un pneumatique adapté pour porter de lourdes charges, dont la bande de roulement comprend une composition à base de caoutchouc naturel modifié par un agent comprenant au moins un dipôle azoté et au moins un groupe associatif azoté selon WO 2012/007442 ne présente pas le compromis de propriétés recherché qui allie une faible résistance au roulement et une résistance à l'usure satisfaisante dans des proportions optimales.

Or pour les concepteurs de pneumatiques destinés à porter de lourdes charges, il est une préoccupation constante d'améliorer le compromis de performances des pneumatiques, notamment la résistance au roulement et la résistance à l'usure, en améliorant les compromis de propriétés, souvent antinomiques, des compositions constituant les pneumatiques, telles qu'une bonne rigidité à basse et moyenne déformation et un allongement à la rupture élevé des compositions.

Le problème technique que se propose de résoudre l'invention est l'amélioration du compromis résistance au roulement et résistance à l'usure de pneumatiques destinés à porter de lourdes charges.

Les Inventeurs ont maintenant mis au point un pneumatique adapté pour porter de lourdes charges dont la bande de roulement comprend une composition à base de polyisoprène synthétique modifié, à titre d'élastomère majoritaire, et d'une charge renforçante de type siliceuse à titre de charge renforçante majoritaire. Cette composition présente un compromis de propriétés (hystérèse/rigidité/allongement à la rupture) amélioré par rapport à une composition conventionnelle comprenant du caoutchouc naturel modifié à titre d'élastomère majoritaire. Utilisée notamment en bande de roulement, la composition selon l'invention confère au pneumatique pour véhicules poids-lourds, ou autre véhicules portant de lourdes charges, une résistance au roulement diminuée et une résistance à l'usure améliorée par rapport à un pneumatique dont la bande de roulement comprend une composition à base de caoutchouc naturel modifié à titre d'élastomère majoritaire.

On entend dans la suite du texte par "taux d'agent de modification" présent dans une composition de caoutchouc, exprimé en pourcentage molaire, le nombre de molécules d'agent de modification présentes dans la composition pour cent motifs d'isoprène. Par exemple, si le taux d'agent de modification est de 0,20% molaire, cela signifie qu'il y aura 0,20 motif issu d'agent de modification pour 100 motifs d'isoprène. Dans le cas où on utilise dans la composition à la fois un polyisoprène déjà greffé par l'agent de modification et un élastomère diénique non greffé par un agent de modification, le taux d'agent de modification représente le nombre de molécules d'agent de modification greffées pour 100 motifs d'élastomères diéniques, le nombre de motifs prenant en compte les deux élastomères (greffé et non greffé), en supposant que d'autres molécules d'agent de modification non déjà greffées n'ont pas été ajoutées dans la composition.

On entend dans la suite du texte par "composition à base de" une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, on entend par "pneumatique poids-lourds", de manière générique et pour ne pas surcharger le texte, tout pneumatique destiné à porter de lourdes charges, qu'il soit pour véhicule poids-lourds, génie civile, agricole ou pour avion.

L'invention a donc pour objet un pneumatique poids-lourd dont la bande de roulement comprend une composition de caoutchouc à base d'au moins:
- un polyisoprène synthétique à titre d'élastomère majoritaire,
- une charge renforçante comprenant au moins 50% en poids d'une charge inorganique renforçante de type siliceuse par rapport au poids total de la charge,
- un agent de réticulation chimique et
- un agent de modification, ledit agent de modification comprenant au moins un groupement Q, et au moins un groupement A reliés entre eux par au moins et de préférence un groupement « espaceur » Sp dans lequel :
   - Q comprend un dipôle contenant au moins et de préférence un atome d'azote,
   - A comprend un groupe associatif comprenant au moins un atome d'azote,
   - Sp est un atome ou un groupe d'atomes formant une liaison entre Q et A.

L'invention a également pour objet un procédé pour fabriquer un pneumatique poids-lourd comprenant la préparation d'une composition de caoutchouc à base d'au moins un polyisoprène synthétique à titre d'élastomère majoritaire, une charge renforçante de type siliceuse, un agent de réticulation chimique et un agent de modification, caractérisé en ce qu'il comprend les étapes suivantes :
- modifier l'élastomère diénique par le greffage post-polymérisation en solution ou en masse d'un agent de modification comprenant au moins un groupement Q, et au moins un groupement A reliés entre eux par au moins et de préférence un groupement « espaceur » Sp dans lequel :
   - Q comprend un dipôle contenant au moins et de préférence un atome d'azote,
   - A comprend un groupe associatif comprenant au moins un atome d'azote,
   - Sp est un atome ou un groupe d'atomes formant une liaison entre Q et A,
- incorporer à l'élastomère diénique ainsi greffé par l'agent de modification, la charge renforçante, en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder la composition de caoutchouc ainsi obtenue pour former la bande de roulement,
- assembler les différents éléments semi-finis constitutifs du pneumatique dont la bande de roulement précédemment formée.

L'invention a également pour objet un procédé pour fabriquer un pneumatique poids-lourd comprenant la préparation d'une composition de caoutchouc pour pneumatique à base d'au moins un polyisoprène synthétique à titre d'élastomère majoritaire, une charge renforçante de type siliceuse, un agent de réticulation chimique et un agent de modification, caractérisé en ce qu'il comprend les étapes suivantes :
- incorporer au cours du mélangeage à l'élastomère diénique, l'agent de modification, puis la charge renforçante, ledit agent de modification comprenant au moins un groupement Q, et au moins un groupement A reliés entre eux par au moins et de préférence un groupement « espaceur » Sp dans lequel :
   - Q comprend un dipôle contenant au moins et de préférence un atome d'azote,
   - A comprend un groupe associatif comprenant au moins un atome d'azote,
   - Sp est un atome ou un groupe d'atomes formant une liaison entre Q et A,
   en malaxant thermomécaniquement le tout, en une ou plusieurs fois, jusqu'à atteindre une température maximale comprise entre 110°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue pour former la bande de roulement,
- assembler les différents éléments semi-finis constitutifs du pneumatique dont la bande de roulement précédemment formée.

Ainsi un premier objet de l'invention est un pneumatique poids-lourd dont la bande de roulement comprend une composition à base d'au moins un polyisoprène synthétique à titre d'élastomère majoritaire, une charge renforçante de type siliceuse, un agent de réticulation chimique et un agent de modification comprenant au moins un groupement Q, et au moins un groupement A reliés entre eux par au moins et de préférence un groupement « espaceur » Sp tels que définis plus haut.

Le premier composant de la composition de caoutchouc selon l'invention est le polyisoprène synthétique à titre d'élastomère majoritaire.

Le polyisoprène synthétique peut avoir toute microstructure qui est fonction des conditions de polymérisation utilisées, notamment de la présence ou non d'un agent modifiant et/ou randomisant et des quantités d'agent modifiant randomisant employées. De préférence, le polyisoprène synthétique présente un fort taux de motifs 1,4-cis, à savoir un taux supérieur à 90% molaire, plus préférentiellement encore un taux supérieur à 95% molaire. Le polyisoprène synthétique peut être préparé en dispersion, en émulsion ou en solution ; il peut être couplé et/ou étoilé ou encore fonctionnalisé avec un agent de couplage et/ou d'étoilage ou de fonctionnalisation.

La composition de caoutchouc selon l'invention est à base d'au moins un polyisoprène synthétique et d'au moins un agent de modification. Le polyisoprène synthétique peut être greffé par l'agent de modification préalablement à la mise en contact du polyisoprène avec les autres constituants de la composition de caoutchouc, ou bien il peut être greffé par réaction avec l'agent de modification, après la mise en contact des différents constituants de la composition, et donc en leur présence, lors de la préparation de ladite composition.

La composition de la bande de roulement du pneumatique poids-lourd selon l'invention peut contenir un polyisoprène synthétique greffé par l'agent de modification (soit greffé préalablement, soit greffé par réaction avec l'agent de modification pendant la préparation de la composition), ou un mélange de plusieurs polyisoprènes synthétiques greffés.

Selon une variante de l'invention, la composition de la bande de roulement du pneumatique poids-lourd selon l'invention comprend un polyisoprène synthétique greffé à titre de seul élastomère. Cette variante constitue une variante préférentielle selon l'invention.

Selon une autre variante de l'invention, la composition de la bande de roulement du pneumatique poids-lourd selon l'invention, peut contenir outre le polyisoprène synthétique greffé, un ou plusieurs autres élastomères diéniques greffés ou non greffés par l'agent de modification selon l'invention.

Le ou les autres élastomères diéniques utilisés en coupage avec l'élastomère greffés selon l'invention sont des élastomères diéniques conventionnels dans le domaine des pneumatiques tels que les élastomères diéniques choisis parmi les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis parmi les copolymères de butadiène-styrène (SBR), les copolymères d'isoprène-butadiène (BIR), les copolymères d'isoprène- styrène (SIR), les copolymères d'isoprène-butadiène-styrène (SBIR) et les mélanges de tels copolymères.

Selon cette autre variante, ces élastomères diéniques conventionnels sont alors présents dans la composition de caoutchouc de la bande de roulement du pneumatique poids-lourd selon l'invention, selon un taux compris entre 0 et 60 pce (les bornes de ce domaine étant exclues), préférentiellement selon un taux allant de plus de 0 à 50 pce, plus préférentiellement encore de plus de 0 à 30 pce.

Dans le cas d'un coupage avec au moins un autre élastomère diénique, la fraction massique de polyisoprène synthétique greffé selon l'invention dans la matrice élastomérique est majoritaire et de préférence supérieure ou égale à 50% en poids du poids total de la matrice. On appelle fraction massique majoritaire selon l'invention la fraction massique la plus élevée du coupage. Ainsi, dans un coupage IR/élastomère A/élastomère B, les fractions massiques peuvent être réparties selon 40/40/20 ou 40/30/30, les fractions massiques majoritaires étant respectivement 40. Et dans un coupage IR/élastomère, les fractions massiques peuvent être réparties selon 50/50 ou 70/30, les fractions massiques majoritaires étant respectivement 50 ou 70.

On notera que l'amélioration des propriétés de la composition de caoutchouc de la bande de roulement du pneumatique poids-lourd selon l'invention, sera d'autant plus élevée, que la proportion dudit ou desdits élastomères diéniques conventionnels dans la composition de caoutchouc sera plus réduite.

Le ou les polyisoprènes synthétiques greffés selon l'invention peuvent être utilisés en association avec tout type d'élastomère synthétique autre que diénique, voire avec des polymères autres que des élastomères, par exemple des polymères thermoplastiques.

Un deuxième composant de la composition de caoutchouc selon l'invention est l'agent de modification. Celui-ci comprend au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A.

On entend par dipôle une fonction capable de former une addition dipolaire [1,3] sur une liaison carbone-carbone insaturée.

Par « groupe associatif », on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogène.

Lorsque les groupes associatifs sont susceptibles de s'associer par des liaisons hydrogène, chaque groupe associatif comporte au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène.

Les groupes associatifs selon l'invention sont également susceptibles de s'associer par des liaisons hydrogène, ioniques et/ou hydrophobes à des fonctions présentes sur des charges.

Les composés selon l'invention comportant un groupement Q, un groupement « espaceur » et un groupement associatif peuvent par exemple être représentés par la formule (Ia) suivante :

A - Sp - Q (Ia).

Les composés selon l'invention comportant un groupement Q, un groupement « espaceur » et deux groupements associatifs peuvent par exemple être représentés par la formule (Ib) suivante :

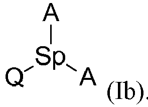

De manière similaire, les composés selon l'invention comportant deux groupements Q, un groupement « espaceur » et un groupement associatif peuvent par exemple être représentés par la formule (Ic) suivante :

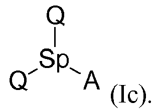

Selon le même principe, les composés selon l'invention comportant deux groupements Q, un groupement « espaceur » et deux groupements associatifs peuvent par exemple être représentés par la formule (Id) suivante :

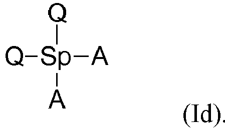

De préférence, le groupement associatif est choisi parmi un groupe imidazolidinyle, uréyle, bis-uréyle, uréido-pyrimidyle, triazolyle, triazinyle.

De préférence, le groupement A répond à l'une des formules (II) à (VI)suivantes : 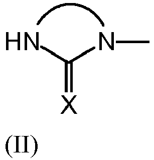 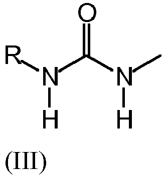 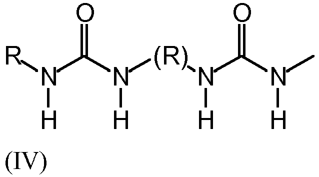 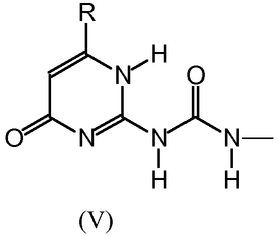 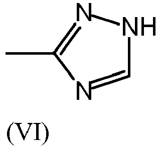 où :
- R désigne un groupement hydrocarboné pouvant éventuellement contenir des hétéroatomes,
- X désigne un atome d'oxygène ou de soufre, de préférence un atome d'oxygène.

De préférence, le groupement A comprend un hétérocycle di ou triazoté, à 5 ou 6 atomes, de préférence diazoté, et comprenant au moins une fonction carbonyle.

De manière encore plus préférée, le groupement A comprend un groupe imidazolidinyle de formule (II).

Le groupement Q est susceptible de se lier à la chaîne élastomère diénique par liaison covalente (greffage). De préférence le groupement Q comprend une fonction oxyde de nitrile, nitrone, ou nitrile imine pouvant se lier à un polymère porteur d'au moins une insaturation, par une cycloaddition de type [3+2].

De préférence le groupement Q est un groupement de formule (VII), (VIII) ou (IX) suivante

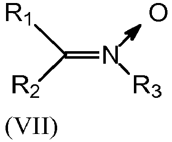

R₄-C≡N→ O (VIII)

R₅-C≡N→ N-R₆ (IX)

dans lesquelles
- R₁ à R₃ sont choisis indépendamment parmi un groupement espaceur Sp, un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 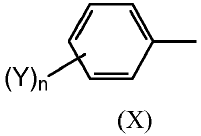
   dans laquelle n représente 1, 2, 3, 4 ou 5 et chaque Y représente indépendamment un groupement espaceur Sp, un groupe alkyle ou un halogénure,
   l'un au moins de R₁ à R₃ désignant un groupement espaceur Sp ou un groupe de formule (X) dans laquelle au moins un Y désigne un groupement espeaceur Sp,
- R₄ à R₅ sont des groupements espaceurs Sp,
- R₆ désigne un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 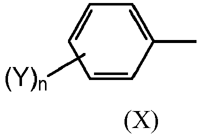
   dans laquelle n représente 1, 2, 3, 4 ou 5 et chaque Y représente indépendamment, un groupe alkyle ou un halogénure.

Le groupement « espaceur » Sp permet de relier au moins un groupement Q et/ou au moins un groupement associatif, A, et ainsi peut être de tout type connu en soi. Le groupement « espaceur » ne doit cependant pas, ou peu, interférer avec les groupements Q et associatif du composé selon l'invention.

Ledit groupement « espaceur » est donc considéré comme un groupement inerte vis-à-vis du groupement Q. Le groupement « espaceur » est de préférence une chaîne hydrocarbonée, linéaire, ramifiée, cyclique, peut contenir un ou plusieurs radicaux aromatiques, et/ou un ou plusieurs hétéroatomes. Ladite chaîne peut éventuellement être substituée, pour autant que les substituants soient inertes vis-à-vis des groupements Q.

Selon un mode de réalisation préféré, le groupement « espaceur » est une chaîne alkyle linéaire ou ramifiée en C1-C24, de préférence C1-C10 et plus préférentiellement une chaîne alkyle linéaire en C1-C6, éventuellement comprenant un ou plusieurs hétéroatomes choisis parmi les atomes d'azote, de soufre, de silicium ou d'oxygène.

Selon un mode de réalisation de l'invention, le groupement Q est de préférence un groupement de formule (XIa) ou (XIb): 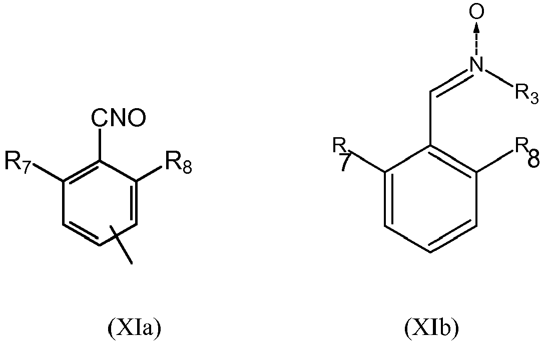 dans lesquelles R7 et R8 représentent indépendamment un hydrogène ou un groupe alkyle en C1-C5, un alcoxyle ou un halogénure et de préférence R7 et R8 représentent indépendamment un groupe alkyle ou un halogénure, et plus préférentiellement R7 et R8 représentent indépendamment un groupe méthyle ou un atome de chlore, R3 est tel que défini précédemment et le groupement A est un groupement de formule (XII) :

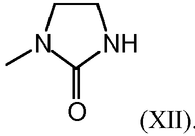

De préférence, le composé destiné à greffer le polymère conformément à l'invention est alors choisi parmi les composés de formule (XIII) à (XXI) suivantes: 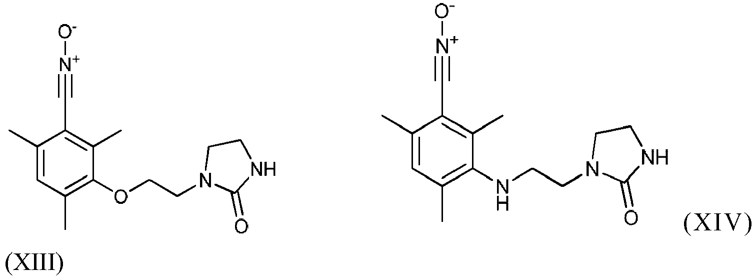 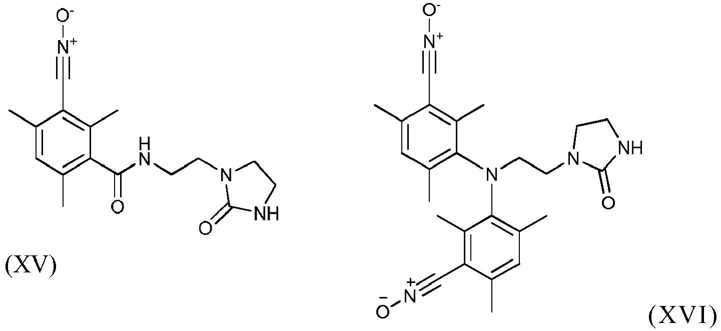 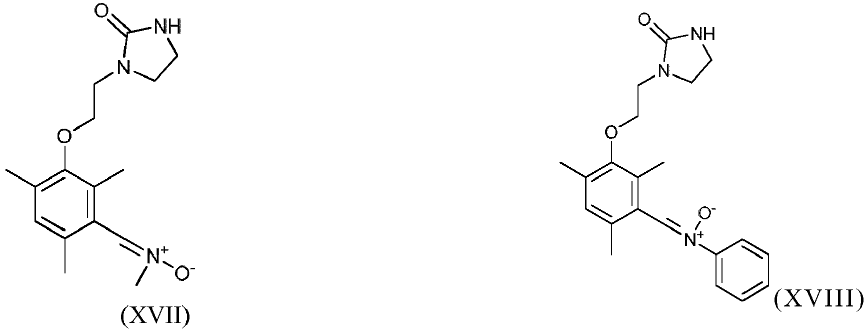 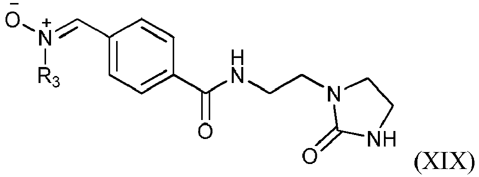 R3 désignant ici un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 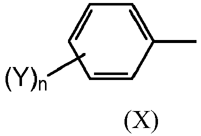 dans laquelle n représente 1, 2, 3, 4 ou 5 et chaque Y représente indépendamment, un groupe alkyle ou un halogénure.

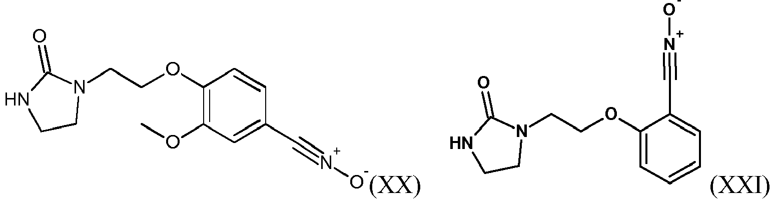

Selon un autre mode de réalisation de l'invention, le composé destiné à greffer le polymère conformément à l'invention est choisi parmi les composés de formule (XXII) et (XXIII). 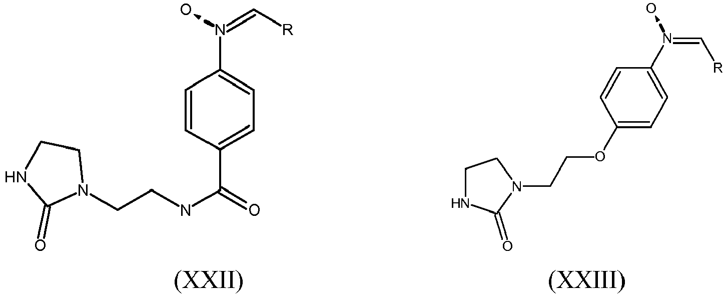 dans lesquelles R est choisi parmi un groupe espaceur Sp, un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 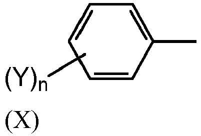 dans laquelle n représente 1, 2, 3, 4 ou 5 et chaque Y représente indépendamment un groupe espaceur Sp, un groupe alkyle ou un halogénure

Selon un mode de réalisation préféré, le taux d'agent de modification varie de 0,01 à 50% molaire, de préférence de 0,01 à 5% molaire.

Un autre composant de la composition comprise dans la bande de roulement du pneumatique selon l'invention est la charge inorganique renforçante siliceuse.

Selon un autre mode de réalisation de l'invention, la charge renforçante est exclusivement constituée d'une charge inorganique renforçante de type siliceuse.

Selon un autre mode de réalisation, la charge renforçante comprend, outre la charge inorganique siliceuse, également du noir de carbone. Selon cet autre mode de réalisation, lorsque du noir de carbone est également présent, il est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone.

De manière préférentielle, le taux de charge renforçante dans la composition est compris entre 30 et 150 pce, plus préférentiellement entre 50 et 120 pce. L'optimum est différent selon les applications particulières visées.

Comme noirs de carbone conviennent tous les noirs de carbone, utilisés individuellement ou sous forme de mélanges, notamment les noirs conventionnellement mis en oeuvre dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Comme charge inorganique renforçante siliceuse convient, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g. Selon un aspect de l'invention, on peut envisager de remplacer tout ou partie de la charge inorganique renforçante siliceuse, par une charge inorganique renforçante alumineuse, en particulier de l'alumine (Al2O3) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante siliceuse est indifférent, que ce soit sous forme de poudre, de microperles, de granulés, de billes ou toute autre forme densifiée appropriée.

Pour coupler la charge inorganique renforçante siliceuse au polyisoprène synthétique, on utilise de manière connue un agent de couplage (ou agent de liaison) au moins bifonctionnel destiné à assurer une connexion suffisante, de nature chimique et/ou physique, entre la charge inorganique siliceuse (surface de ses particules) et le polyisoprène, en particulier des organosilanes ou des polyorganosiloxanes bifonctionnels.

On utilise notamment de manière connue des silanes polysulfurés, dits "symétriques" ou "asymétriques" selon leur structure particulière, tels que décrits par exemple dans les demandes WO03/002648 et WO03/002649.

Dans la composition de caoutchouc comprise dans la bande de roulement le pneumatique selon l'invention, la teneur en agent de couplage est préférentiellement comprise entre 3 et 15 pce, plus préférentiellement entre 4 et 8 pce. Son taux est aisément ajusté par l'homme du métier selon le taux de charge siliceuse; il est typiquement de l'ordre de 0,5% à 15% en poids par rapport à la quantité de charge siliceuse.

La composition de caoutchouc comprise dans la bande de roulement le pneumatique selon l'invention peut également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables

L'homme du métier comprendra qu'à titre de charge équivalente de la charge inorganique renforçante siliceuse décrite précédemment, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

La composition de caoutchouc comprise dans la bande de roulement le pneumatique selon l'invention peut également contenir, des charges organiques renforçantes qui peuvent remplacer tout ou partie du noir de carbone ou des charges inorganiques renforçantes autres que siliceuses décrites plus haut. Comme exemples de charges organiques renforçante, on peut citer les charges organiques de polyvinyle fonctionnalisé telles que décrites dans les demandes WO-A-2006/069792, WO-A-2006/069793, WO-A-2008/003434 et WO-A-2008/003435.

Un autre composant de la composition de caoutchouc de la bande de roulement le pneumatique selon l'invention est l'agent de réticulation chimique.

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc de la bande de roulement le pneumatique selon l'invention, peut comporter également tout ou partie des additifs usuels habituellement utilisés dans les compositions d'élastomères destinées à la fabrication de pneumatiques poids-lourds, en particulier de bandes de roulement, comme par exemple des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

Selon une variante de l'invention, la composition de caoutchouc de la bande de roulement pour pneumatique poids-lourd selon l'invention, comporte des plastifiants ou des huiles d'extension, que ces derniers soient de nature aromatique ou non-aromatique, ceux-ci sont de préférence présents selon un taux inférieur à 10 pce. On utilise alors à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés. Selon une autre variante, la composition de caoutchouc ne comporte pas de plastifiant ou d'huile d'extension.

Un autre objet de l'invention est le procédé de fabrication du pneumatique poids-lourd selon l'invention, comprenant les étapes de préparation de la composition de caoutchouc comprise dans sa bande de roulement.

La composition de caoutchouc est fabriquée dans des mélangeurs appropriés, en utilisant deux phases de préparation successives selon une procédure générale bien connue de l'homme du métier. Une première phase de travail ou malaxage thermo-mécanique (parfois qualifiée de phase "non-productive") est conduite à haute température, jusqu'à une température maximale comprise entre 130°C et 200°C, de préférence entre 145°C et 185°C, La durée totale du malaxage, dans cette première phase, est de préférence comprise entre 1 et 15 min. Après refroidissement du mélange ainsi obtenu au cours de la première phase non-productive, on incorpore alors le système de réticulation chimique à basse température, généralement dans un mélangeur externe tel qu'un mélangeur à cylindres; le tout est alors mélangé (phase productive) pendant quelques minutes, par exemple entre 2 et 15 min. Cette seconde phase de travail mécanique (parfois qualifiée de phase "productive") est conduite à plus basse température, typiquement inférieure à 120°C, par exemple entre 60°C et 100°C.

De manière générale, tous les constituants de base de la composition de caoutchouc de la bande de roulement du pneumatique de l'invention, à l'exception du système de réticulation chimique, à savoir la ou les charges renforçantes, l'agent de couplage le cas échéant, sont incorporés de manière intime, par malaxage, à l'élastomère diénique ou aux élastomères diéniques au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un premier mode de réalisation de l'invention, le polyisoprène synthétique a été greffé par l'agent de modification préalablement à la première phase dite non-productive de la préparation de la composition de caoutchouc. Ainsi, dans ce cas, c'est le polyisoprène greffé qui est introduit au cours de la première phase dite non-productive. Ainsi selon ce premier mode de réalisation du procédé, celui-ci comprend les étapes suivantes:
- modifier le polyisoprène synthétique en post-polymérisation ou en solution ou en masse par greffage d'un agent de modification comprenant au moins un groupement Q, et au moins un groupement A reliés entre eux par au moins et de préférence un groupement « espaceur » Sp tel que décrit plus haut,
- incorporer au polyisoprène synthétique ainsi greffé par l'agent de modification, la charge renforçante et tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite l'agent de réticulation chimique,
- malaxer le tout jusqu'à une température maximale inférieure à 120°C,
- extruder la composition de caoutchouc ainsi obtenue pour former la bande de roulement,
- assembler les différents éléments semi-finis constitutifs du pneumatique dont la bande de roulement précédemment formée.

Selon un second mode de réalisation de l'invention, le greffage du polyisoprène synthétique par l'agent de modification est effectué concomitamment à la préparation de la composition de caoutchouc. Dans ce cas, tant le polyisoprène synthétique non encore greffé que l'agent de modification sont introduits au cours de la première phase dite non-productive. De manière préférentielle, la charge renforçante est alors ajoutée subséquemment au cours de cette même phase non-productive afin de prévenir toute réaction parasite avec l'agent de modification.

Ainsi, selon ce deuxième mode de réalisation du procédé, celui-ci comprend les étapes suivantes:
- incorporer au polyisoprène, un agent de modification comprenant au moins un groupement Q, et au moins un groupement A reliés entre eux par au moins et de préférence un groupement « espaceur » Sp, tel que décrit plus haut, à une température et pendant une durée telle que le rendement de greffage soit de préférence supérieur à 60%, plus préférentiellement supérieur à 80%, et, de préférence subséquemment, la charge renforçante, ainsi que tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite l'agent de réticulation chimique,
- malaxer le tout jusqu'à une température maximale inférieure à 120°C,
- extruder la composition de caoutchouc ainsi obtenue pour former la bande de roulement,
- assembler les différents éléments semi-finis constitutifs du pneumatique dont la bande de roulement précédemment formée.

L'homme du métier comprendra que lorsque la composition de caoutchouc comprend des élastomères diéniques conventionnels non greffés tels que décrits précédemment, le pneumatique poids-lourd selon l'invention est fabriqué préférentiellement selon le premier mode de réalisation du procédé de fabrication du pneumatique afin d'éviter toute réaction parasite entre ces autres élastomères conventionnels et l'agent de modification.

Le greffage du polyisoprène synthétique se fait par réaction dudit élastomère avec le ou les groupes réactifs portés par l'agent de modification. Lors de cette réaction, ce ou ces groupes réactifs forment des liaisons covalentes avec la chaîne de polyisoprène.

Le greffage de l'agent de modification peut être réalisé en masse, par exemple dans un mélangeur interne ou un mélangeur externe tel qu'un mélangeur à cylindres. Le greffage est alors mis en oeuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le procédé de greffage peut également être effectué en solution en continu ou en discontinu. Le polyisoprène ainsi modifié peut être séparé de sa solution par tout type de moyen connu par l'homme de l'art et en particulier par une opération de stripping à la vapeur d'eau.

Le greffage de l'agent de modification est effectué par cycloaddition [3+2] du ou des groupes réactifs de l'agent de modification et une ou plusieurs doubles liaisons de la chaîne du polyisoprène. Le mécanisme de la cycloaddition peut être illustré par les équations suivantes:
- Cycloaddition d'un oxyde de nitrile sur une insaturation ou double liaison du polyisoprène 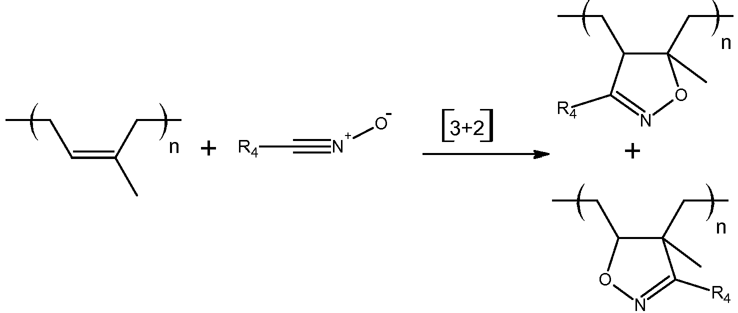
- Cycloaddition d'une nitrone sur une insaturation ou double liaison du polyisoprène 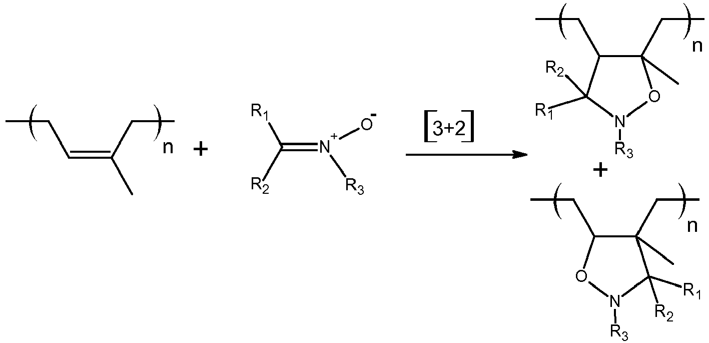
- Cycloaddition d'un nitrile imine sur une insaturation ou double liaison du polyisoprène

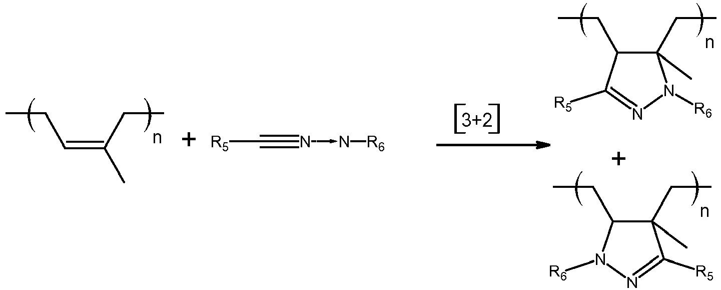

L'invention ainsi que ses avantages seront aisément compris à la lumière des exemples de réalisation qui suivent.

### EXEMPLES DE REALISATION

### I. Mesures et tests utilisés

Les élastomères et compositions de caoutchouc sont caractérisés, avant et après cuisson, comme indiqué ci-après.

### Détermination du taux d'agent de modification

La détermination du taux molaire de composé oxyde de nitrile greffé est réalisée par une analyse RMN. Les spectres sont acquis sur un spectromètre 500 MHz BRUKER équipé d'une sonde " large bande " BBIz-grad 5 mm. L'expérience RMN ¹H quantitative, utilise une séquence simple impulsion 30° et un délai de répétition de 3 secondes entre chaque acquisition. Les échantillons sont solubilisés dans le sulfure de carbone (CS2). 100 µL de cyclohexane deutéré (C6D12) sont ajoutés pour le signal de lock.

Le spectre RMN ¹H permet de quantifier les motifs nitriloxide greffés par intégration des signaux caractéristiques des protons CH2N et CH2O qui apparaissent à un déplacement chimique compris entre δ=3.1-3,8ppm

Le spectre RMN 2D HSQC ¹H-¹³C permet de vérifier la nature du motif greffé grâce aux déplacements chimiques des atomes de carbone et de proton.

### Température de transition vitreuse

Les températures de transition vitreuse Tg des polymères sont mesurées au moyen d'un calorimètre différentiel (" differential scanning calorimeter "). L'analyse est réalisée selon les requis de la norme ASTM D3418-08.

### Spectroscopie proche infrarouge (NIR)

La spectroscopie proche infrarouge (NIR) est utilisée pour déterminer quantitativement le taux massique de styrène dans l'élastomère ainsi que sa microstructure (répartition relative des unités butadiene 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410» et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Essais de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 100% et 300% d'allongement notés respectivement MSA100 et MSA300.

Les contraintes à la rupture (en MPa) et les allongements à la rupture (en %) sont mesurés à 23°C ± 2°C et à 100°C ± 2°C, selon la norme NF T 46-002.

### Propriétés dynamiques

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente (60°C). On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle aller, on indique la valeur maximale de tan(δ) observée, noté tan(δ)max, ainsi que l'écart de module complexe (ΔG*) entre les valeurs à 0,1% et à 100% de déformation (effet Payne).

### II. Exemples de compositions

### II-1. Préparation de l'agent de modification 2,4,6-trimethyl-3-(2-(2-oxoimidazolidin-1-yl)ethoxy) nitriloxide,

L'agent de modification est préparé selon la méthode décrite dans la demande WO 2012/007441.

### II-2. Préparation des compositions

On procède pour les essais qui suivent de la manière suivante: on introduit dans un mélangeur interne Polylab de 85cm³, rempli à 70% et dont la température initiale de cuve est d'environ 110°C, le ou les élastomères diéniques non greffés. Pour les mélanges concernant l'invention, l'agent de modification est introduit en même temps que l'élastomère diénique et est conduit un travail thermomécanique de 1 min 30 à 25°C, en mélangeant le tout (phase productive) pendant environ 5 à 6 min.

Ensuite, pour toutes les compositions (témoins et de l'invention) la ou les charges renforçantes éventuelles, l'agent de couplage éventuel puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

Les compositions de caoutchouc sont données dans le tableau 9. Les quantités sont exprimées en parties pour 100 parties en poids d'élastomère (pce).

**Tableau 9**

| | | Composition témoin | Composition selon l'invention | Composition témoin | Composition comparative |
|---|---|---|---|---|---|
| | | T1 | 1 | T2 | 2 |
| | | | | | |
| | NR (1) | | | 100 | 100 |
| | IR (2) | 100 | 100 | | |
| | Noir de carbone (3) | 3 | 3 | 3 | 3 |
| | Silice (4) | 50 | 50 | 50 | 50 |
| | Silane (5) | 5 | 5 | 5 | 5 |
| | Agent de modification (6) | | 4.25 | | 4.25 |
| | ZnO (7) | 2.7 | 2.7 | 2.7 | 2.7 |
| | SAD (8) | 2.5 | 2.5 | 2.5 | 2.5 |
| | Antioxydant (9) | 1.5 | 1.5 | 1.5 | 1.5 |
| | Antioxydant (10) | 1 | 1 | 1 | 1 |
| | Plastifiant (11) | 1 | 1 | 1 | 1 |
| | Accélérateur (12) | 1.8 | 1.8 | 1.8 | 1.8 |
| | Soufre | 1.5 | 1.5 | 1.5 | 1.5 |
| | | | | | |
| Prop. extenso 60°C | Allongement rupture (%) | 590.70 | 521.85 | 666.30 | 582.20 |
| | Contrainte rupture (MPa) | 25.12 | 25.00 | 26.12 | 23.42 |
| | MSA100 | 1.93 | 2.24 | 1.75 | 2.06 |
| | MSA300 | 2.99 | 3.97 | 2.68 | 3.42 |
| | MSA300/MSA100 | 1.55 | 1.77 | 1.53 | 1.66 |
| | | | | | |
| Prop. dyn 60°C | G* (50%) (MPa) | 1.50 | 1.29 | 1.38 | 1.33 |
| | Δ G* (100%-0.1%) (MPa) | 2.13 | 0.46 | 1.44 | 0.82 |
| | Tan(δ)max | 0.133 | 0.087 (-34%) | 0.114 | 0.105 (-8%) |

| | | | | | |
|---|---|---|---|---|---|
| *(1) Caoutchouc naturel déprotéiné* *(2) Polyisoprene de synthèse 95% de motifs 1,4-cis* *(3) N234* *(4) silice "Zeosil 1165 MP" société Rhodia sous forme de microperles (BET et CTAB : environ 150-160 m2*/*g)* *(5) TESPT ("Si69" société Degussa) ;* *(6) agent de modification : 2,4,6-trimethyl-3-(2-(2-oxoimidazolidin-1-yl)ethoxy) nitriloxide* *(7) oxyde de zinc (grade industriel - société Umicore)* *(8) Stéarine ("Pristerene 4931"- société Uniqema)* *(9) N-1,3-diméthylbutyl-Nphényl-para-phénylènediamine ("Santoflex 6-PPD" société Flexsys)* *(10) 2,2,4-triméthyl-1,2-dihydroquinoline (société Flexys)* *(11) Paraffine* *(12) N-cyclohexyl-2-benzothiazyl-sulfénamide ("Santocure CBS" société Flexys).* | | | | | |

### Essais de caractérisation - Résultats

L'objet de cet exemple est de comparer les propriétés d'une composition de caoutchouc à base de silice selon l'invention comprenant un élastomère polyisoprène synthétique greffé (composition selon l'invention) à une composition comparative comprenant du caoutchouc naturel greffé (composition comparative).

La composition selon l'invention présente à 60°C une forte diminution d'effet Payne vue au travers de la diminution d'hystérèse (tan(δ)max) au cours d'un balayage en déformation à contrainte imposée par rapport à sa composition témoins comprenant un polyisoprène non-greffé. Cette diminution de l'ordre de 34% est bien plus importante que celle observée pour la composition comparative à base de caoutchouc naturel greffé qui n'est que de 8%.

On constate que la composition de caoutchouc conforme à l'invention à base de silice et comprenant un polyisoprène greffé, présente des modules MSA 100% et MSA 300% élevés tout en baissant également très fortement l'hystérèse de la composition. L'amélioration du compromis de propriétés est significative et inattendue au vu des propriétés observées avec une composition à base de caoutchouc naturel greffé.

### III. Essais Pneumatiques

Ces résultats significatifs d'augmentation des modules MSA 100% et MSA 300% et de baisse de l'hystérèse d'une composition à base d'un polyisoprène de synthèse greffé, ont été confirmés lors d'essais sur route de pneumatiques poids-lourds décrits ci-après.

| | Composition témoin | Composition selon l'invention |
|---|---|---|
| | A | B |
| | | |
| IR (1) | 100 | 100 |
| Noir de carbone (2) | 3 | 3 |
| Silice (3) | 50 | 55 |
| Silane (4) | 5 | 5.5 |
| Agent de modification (5) | | 2.55 |
| ZnO (6) | 2.7 | 2.7 |
| SAD (7) | 2.5 | 2.5 |
| Antioxydant (8) | 1.5 | 1.5 |
| Antioxydant (9) | 1 | 1 |
| Plastifiant (10) | 1 | 1 |
| Accélérateur (11) | 1.8 | 1.92 |
| Soufre | 1.5 | 1.6 |
| | | |
| Allongement rupture (%) | 714.40 | 642.80 |
| Contrainte rupture (MPa) | 25.38 | 25.24 |
| MSA100 | 1.84 | 2.15 |
| MSA300 | 2.25 | 3.38 |
| MSA300/MSA100 | 1.22 | 1.57 |
| | | |
| G* (50%) (MPa) | 1.45 | 1.35 |
| Δ G* (100%-0.1%) (MPa) | 2.58 | 0.42 |
| Tan(δ)max | 0.121 | 0.070 |

| | | |
|---|---|---|
| *(1) Polyisoprene de synthèse 95% de motifs 1,4-cis* *(2) N234* *(3) silice "Zeosil 1165 MP" société Rhodia sous forme de microperles (BET et CTAB : environ 150-160 m2*/*g)* *(4) TESPT ("Si69" société Degussa) ;* *(5) agent de modification 2,4,6-trimethyl-3-(2-(2-oxoimidazolidin-1-yl)ethoxy) nitriloxide* *(6) oxyde de zinc (grade industriel - société Umicore)* *(7) Stéarine ("Pristerene 4931"- société Uniqema)* *(8) N-1,3-diméthylbutyl-N-phényl-para-phénylènediamine ("Santoflex 6-PPD" société Flexsys)* *(9) 2,2,4-triméthyl-1,2-dihydroquinoline (société Flexys)* *(10) Paraffine* *(11) N-cyclohexyl-2-benzothiazyl-sulfénamide ("Santocure CBS" société Flexys).* | | |

Deux compositions A et B précédentes ont été utilisées pour constituer la bande de roulement de pneumatiques à carcasse radiale de dimension 315/70R22.5 XE2+. Ces pneumatiques sont identiques à l'exception de la composition constituant leurs bandes de roulements respectives.

### III-1 - Description des tests

### III-1.1 - Résistance au roulement :

La mesure de résistance au roulement est pratiquée selon la norme ISO 9948, applicable aux pneus pour camionnettes et poids lourds. On fait rouler le pneu sur un volant de grand diamètre, entrainé par un moteur. La méthode consiste à mesurer la décélération du système au voisinage de 80km/h pour en déduire la résistance au roulement.

La résistance au roulement exprimée en base 100 du témoin est exprimée comme le rapport entre la force de résistance au roulement du pneu témoin constitué de la composition A et la force de résistance au roulement du pneu constitué de la composition B. La force de résistance au roulement est déduite de la force freineuse globale mesurée à laquelle on soustrait la force de ralentissement du pneu libre et la force de ralentissement du volant libre.

### III.1.2 - Résistance à l'usure :

Les essais d'usure ont été réalisés sur des pneumatiques montés sur la position avant d'un camion de type tracteur. Le roulage d'usure est mené sur une distance de 30000km. La performance usure exprimée en base 100 du témoin est calculée par le ratio entre la perte de hauteur moyenne mesurée pour les 2 pneus de la composition témoin A et la perte de hauteur moyenne pour les deux pneus de la composition B.

Les résultats des pneus correspondants aux formulations précédentes sont indiqués en base 100 dans le tableau ci-dessous.

### III-2 - Résultats

Les résultats obtenus pour les performances pneumatiques sont présentés dans le tableau qui suit. Une valeur supérieure à 100 indique un résultat de performance pneu amélioré

| | Pneu témoin | Pneu selon l'invention |
|---|---|---|
| | A | B |
| Résistance au roulement | 100 | 112 |
| Usure | 100 | 112 |

Les pneus réalisés avec la composition B présentent non seulement une résistance au roulement fortement améliorée par rapport à celle du témoin, mais également une performance usure favorable.

## Revendications

1. Pneumatique poids-lourd comportant une bande de roulement constituée d'une composition de caoutchouc réticulée, **caractérisée en ce que** ladite composition est à base au moins des composants suivants:
- une matrice élastomère comprenant à titre majoritaire un polyisoprène de synthèse,
- une charge renforçante comprenant à titre majoritaire une charge inorganique renforçante de type siliceuse, et
- un agent de liaison charge inorganique renforçante/ élastomère diénique fonctionnalisé
- un agent de réticulation chimique et
- un agent de modification, éventuellement déjà greffé sur l'élastomère, choisi parmi les composés comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A.

2. Pneumatique poids-lourd selon la revendication 1, **caractérisé en ce que** A est choisi parmi les groupes imidazolidinyle, triazolyle, triazinyle, bis-uréyle, uréyle, uréido-pyrimidyle.

3. Pneumatique poids-lourd selon la revendication 1 ou 2, **caractérisé en ce que** le groupement A répond à l'une des formules (II) à (VI) suivantes : 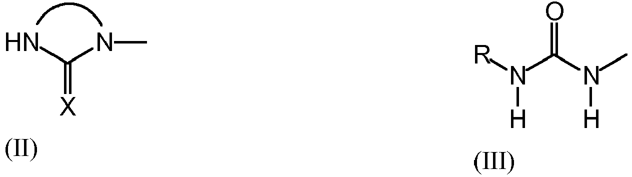 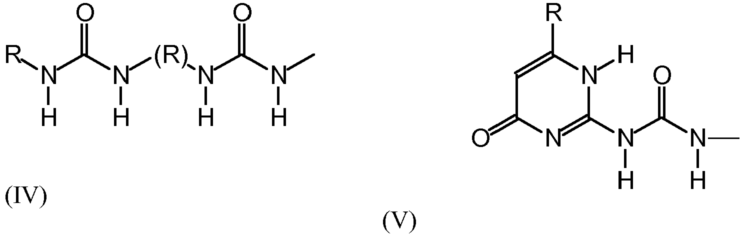 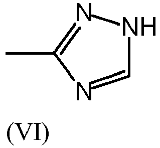 où :
- R désigne un groupement hydrocarboné pouvant éventuellement contenir des hétéroatomes,
- X désigne un atome d'oxygène ou de soufre, de préférence un atome d'oxygène.

4. Pneumatique poids-lourd selon l'une quelconque des revendications 1 à 3, **caractérisé en ce que** Q comprend une fonction oxyde de nitrile, nitrone ou nitrile imine.

5. Pneumatique poids-lourd selon l'une quelconque des revendications 1 à 4, **caractérisé en ce que** le groupement Q est un groupe de formule (VII), (VIII) ou (IX) suivante: 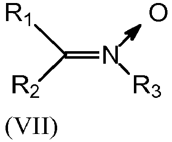
R₄-C≡N→ O (VIII)
R₅-C≡N→ N-R₆ (IX)
dans lesquelles
R₁ à R₃ sont choisis indépendamment parmi un groupement espaceur Sp, un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 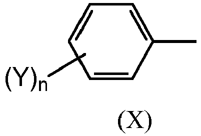 dans laquelle n représente 1, 2, 3, 4 ou 5 et chaque Y représente indépendamment un groupement espaceur Sp, un groupe alkyle ou un halogénure,
l'un au moins de R₁ à R₃ désignant un groupement espaceur Sp ou un groupe de formule (X) dans laquelle au moins un Y désigne un groupement espeaceur Sp,
- R₄ à R₅ sont des groupements espaceurs Sp,
- R₆ désigne un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 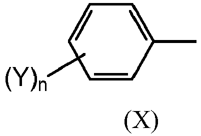 dans laquelle n représente 1, 2, 3, 4 ou 5 et chaque Y représente indépendamment, un groupe alkyle ou un halogénure.

6. Pneumatique poids-lourd selon l'une quelconque des revendications 1 à 5, **caractérisé en ce que** le groupement « espaceur » est une chaîne alkyle linéaire ou ramifiée en C₁-C₂₄, de préférence C₁-C₁₀ éventuellement comprenant un ou plusieurs hétéroatomes choisis parmi les atomes d'azote, de soufre, de silicium ou d'oxygène.

7. Pneumatique poids-lourd selon l'une quelconque des revendications 1 à 6, **caractérisé en ce que** le groupement Q est un groupement de formule (XIa) ou (XIb): 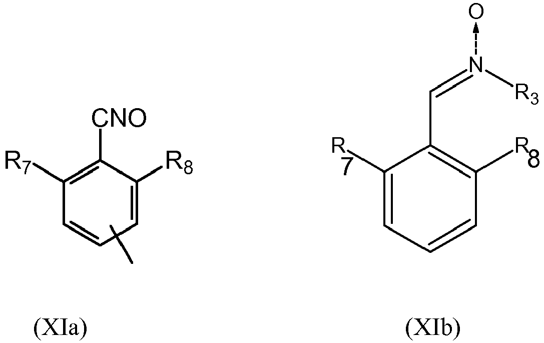 dans lesquelles R7 et R8 représentent indépendamment un hydrogène ou un groupe alkyle en C1-C5, un alcoxyle ou un halogénure et de préférence R7 et R8 représentent indépendamment un groupe alkyle ou un halogénure, et plus préférentiellement R7 et R8 représentent indépendamment un groupe méthyle ou un atome de chlore, R₃ est tel que défini dans la revendication 5 et le groupement A est un groupement de formule (XII)

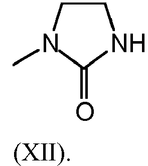

8. Pneumatique poids-lourd selon l'une quelconque des revendications 1 à 7, **caractérisé en ce que** l'agent de modification est choisi parmi les composés de formule (XIII) à (XXI) suivantes: 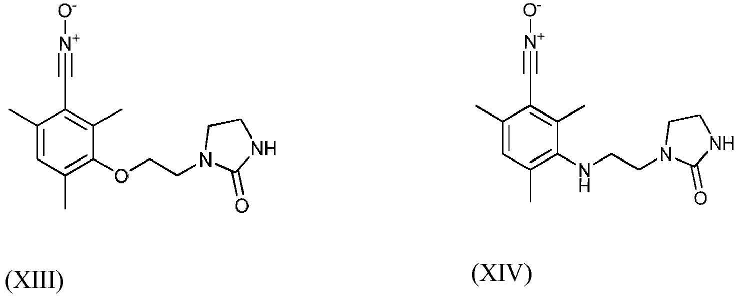 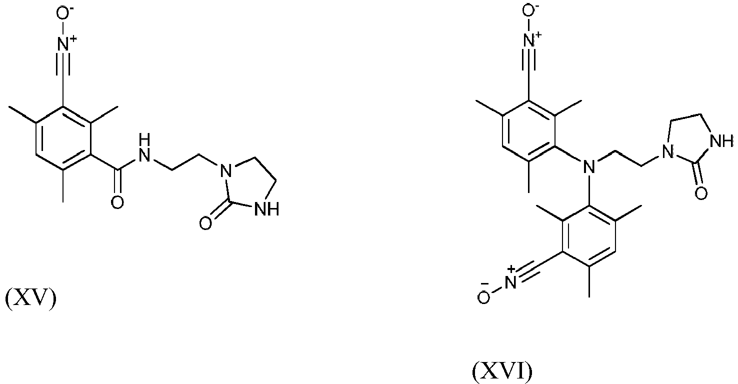 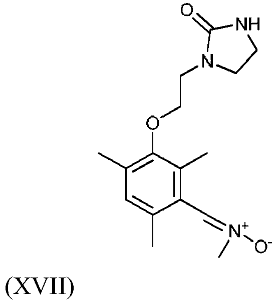 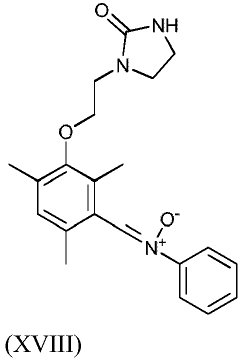 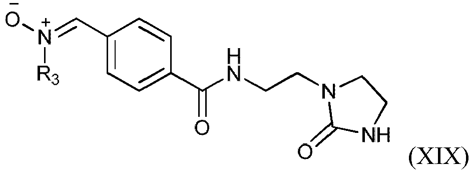 R3 désigne un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 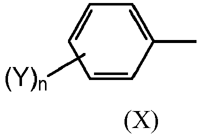 dans laquelle n représente 1, 2, 3, 4 ou 5 et chaque Y représente indépendamment, un groupe alkyle ou un halogénure.

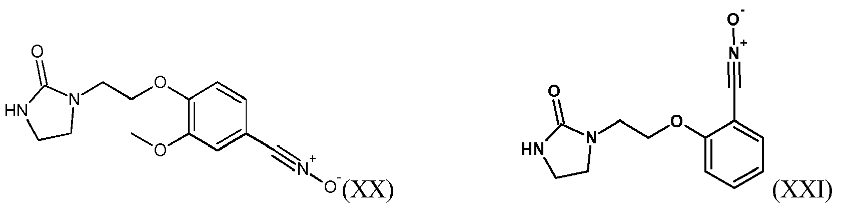

9. Pneumatique poids-lourd selon l'une quelconque des revendications 1 à 6, **caractérisé en ce que** l'agent de modification est choisi parmi les composés de formule (XXII) et (XXIII) suivantes:

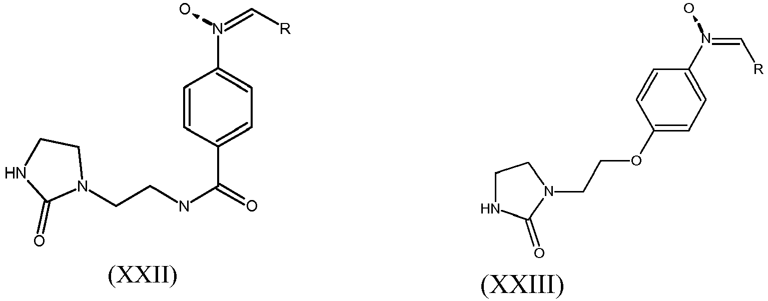

10. Pneumatique poids-lourd selon l'une quelconque des revendications 1 à 9, **caractérisé en ce que** la composition de caoutchouc comprend au plus 10 pce d'un plastifiant.

11. Pneumatique poids-lourd selon l'une quelconque des revendications 1 à 9, **caractérisé en ce que** la matrice élastomère est constituée de polyisoprène synthétique greffé à titre de seul élastomère.

12. Pneumatique poids-lourd selon l'une quelconque des revendications 1 à 9, **caractérisé en ce que** la matrice élastomère comprend au moins un autre élastomère diénique greffé ou non.

13. Pneumatique poids-lourd selon l'une quelconque des revendications précédentes, **caractérisé en ce que** l'agent de réticulation chimique comprend 0,5 à 12 pce de soufre, de préférence 1 à 10 pce de soufre, ou 0,01 à 10 pce d'un ou plusieurs composés peroxydes.

14. Pneumatique poids-lourd selon l'une quelconque des revendications précédentes, **caractérisé en ce que** le taux d'agent de modification varie de 0,01% molaire à 50% molaire, de préférence de 0.01% molaire à 5 % molaire.

15. Procédé de fabrication d'un pneumatique poids-lourd comprenant l'étape de préparation de la composition de caoutchouc de la bande de roulement qui comprend les étapes suivantes :
- modifier du polyisoprène de synthèse par greffage d'un agent de modification comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A,
- incorporer au polyisoprène de synthèse ainsi greffé par l'agent de modification, une charge renforçante, en malaxant thermomécaniquement le tout, en une ou plusieurs fois, jusqu'à atteindre une température maximale comprise entre 110°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder la composition de caoutchouc ainsi obtenue pour obtenir un profilé pour bande de roulement,
- assembler les différents éléments semi-finis constitutifs du pneumatique dont la bande de roulement précédemment formée.

16. Procédé de fabrication d'un pneumatique poids-lourd comprenant l'étape de préparation de la composition de caoutchouc de la bande de roulement qui comprend les étapes suivantes :
- à une température et pendant une durée telle que le rendement de greffage soit de préférence supérieur à 60%, incorporer au polyisoprène, un agent de modification comprenant au moins un groupement Q, et au moins un groupement A reliés entre eux par au moins et de préférence un groupement « espaceur » Sp, dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A,
- incorporer subséquemment la charge renforçante, ainsi que tous les constituants de base de la composition, à l'exception du système de réticulation chimique, en malaxant thermomécaniquement le tout, en une ou plusieurs fois, jusqu'à atteindre une température maximale comprise entre 110°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder la composition de caoutchouc ainsi obtenue pour former la bande de roulement,
- assembler les différents éléments semi-finis constitutifs du pneumatique dont la bande de roulement précédemment formée.

## Patentansprüche

1. Schwerlastreifen mit einer Lauffläche, die aus einer vernetzten Kautschuk-Zusammensetzung besteht, **dadurch gekennzeichnet, dass** die Zusammensetzung auf mindestens den folgenden Bestandteilen basiert:
- einer Elastomer-Matrix, die als Hauptbestandteil ein synthetisches Polyisopren umfasst,
- einem verstärkenden Füllstoff, der als Hauptbestandteil einen verstärkenden anorganischen Füllstoff des Siliziumdioxid-Typs umfasst, und
- einem Bindemittel für den verstärkenden anorganischen Füllstoff/das funktionalisierte Dien-Elastomer
- einem chemischen Vernetzungsmittel und
- einem Modifizierungsmittel, das gegebenenfalls bereits an das Elastomer gepfropft ist, ausgewählt aus Verbindungen, die mindestens eine Gruppe Q und mindestens eine Gruppe A umfassen, die miteinander durch mindestens und vorzugsweise eine "Spacer"-Gruppe Sp verbunden sind, worin:
- Q einen Dipol umfasst, der mindestens und vorzugsweise ein Stickstoffatom enthält,
- A eine assoziative Gruppe umfasst, die mindestens ein Stickstoffatom umfasst,
- Sp ein Atom oder eine Gruppe von Atomen ist, das/die eine Verbindung zwischen Q und A bildet/bilden.

2. Schwerlastreifen nach Anspruch 1, **dadurch gekennzeichnet, dass** A aus Imidazolidinyl-, Triazolyl-, Triazinyl-, Bisureyl-, Ureyl-, Ureido-, Ureidopyrimidylgruppen ausgewählt ist.

3. Schwerlastreifen nach Anspruch 1 oder 2, **dadurch gekennzeichnet, dass** die Gruppe A einer der folgenden Formeln (II) bis (VI) entspricht: 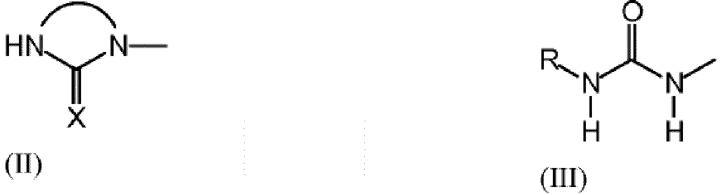 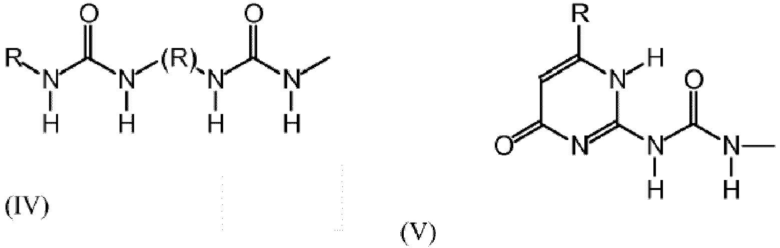 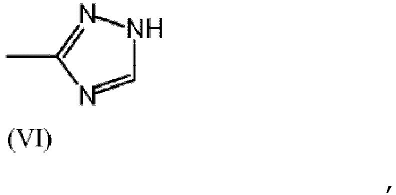 wobei:
- R für eine Kohlenwasserstoffgruppe steht, die gegebenenfalls Heteroatome enthalten kann,
- X für ein Sauerstoff- oder Schwefelatom, vorzugsweise ein Sauerstoffatom, steht.

4. Schwerlastreifen nach einem der Ansprüche 1 bis 3, **dadurch gekennzeichnet, dass** Q eine Nitriloxid-, Nitron- oder Nitrilimin-Funktion umfasst.

5. Schwerlastreifen nach einem der Ansprüche 1 bis 4, **dadurch gekennzeichnet, dass** die Gruppe Q eine Gruppe der folgenden Formel (VII), (VIII) oder (IX) ist: 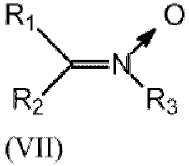
R₄-C≡N→O (VIII)
R₅-C≡N→ N-R₆ (IX)
in denen
R₁ bis R₃ unabhängig aus einer Spacer-Gruppe Sp, einem Wasserstoffatom, einer geraden oder verzweigten C1-C20-Alkylgruppe, einer geraden oder verzweigten C3-C20-Cycloalkylgruppe, einer geraden oder verzweigten C6-C20-Arylgruppe und einer Gruppe der Formel (X) 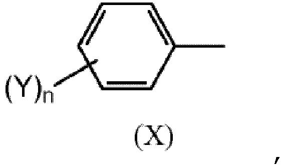 in der n für 1, 2, 3, 4 oder 5 steht und jedes Y unabhängig für eine Spacer-Gruppe Sp, eine Alkylgruppe oder ein Halogenid steht, ausgewählt sind,
wobei mindestens ein Rest aus R₁ bis R₃ für eine Spacer-Gruppe Sp oder eine Gruppe der Formel (X) steht, in der mindestens ein Y für eine Spacer-Gruppe Sp steht,
- R₄ bis R₅ Spacer-Gruppen Sp sind,
- R₆ für ein Wasserstoffatom, eine gerade oder verzweigte C1-C20-Alkylgruppe, eine gerade oder verzweigte C3-C20-Cycloalkylgruppe, eine gerade oder verzweigte C6-C20-Arylgruppe und eine Gruppe der Formel (X) 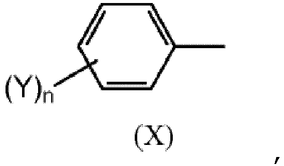 in der n für 1, 2, 3, 4 oder 5 steht und jedes Y unabhängig für eine Alkylgruppe oder ein Halogenid steht, steht.

6. Schwerlastreifen nach einen der Ansprüche 1 bis 5, **dadurch gekennzeichnet, dass** die "Spacer"-Gruppe eine gerade oder verzweigte C1-C24-, vorzugsweise C1-C10-, Alkylkette ist, die gegebenenfalls ein oder mehrere aus Stickstoff-, Schwefel-, Silizium- oder Sauerstoffatomen ausgewählte Heteroatome umfasst.

7. Schwerlastreifen nach einem der Ansprüche 1 bis 6, **dadurch gekennzeichnet, dass** die Gruppe Q eine Gruppe der Formel (XIa) oder (XIb) ist: 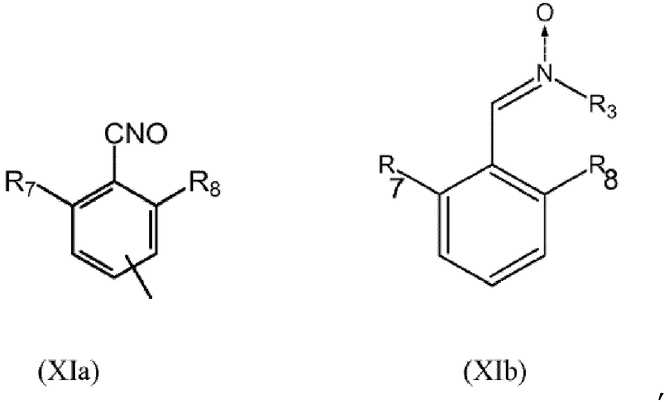 in denen R7 und R8 unabhängig für einen Wasserstoff oder eine C1-C5-Alkylgruppe, ein Alkoxyl oder ein Halogenid stehen und vorzugsweise R7 und R8 unabhängig für eine Alkylgruppe oder ein Halogenid stehen und stärker bevorzugt R7 und R8 unabhängig für eine Methylgruppe oder ein Chloratom stehen, R3 wie in Anspruch 5 definiert ist und die Gruppe A eine Gruppe der Formel (XII) ist

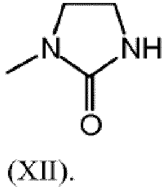

8. Schwerlastreifen nach einem der Ansprüche 1 bis 7, **dadurch gekennzeichnet, dass** das Modifizierungsmittel aus den folgenden Verbindungen der Formel (XIII) bis (XXI) ausgewählt wird: 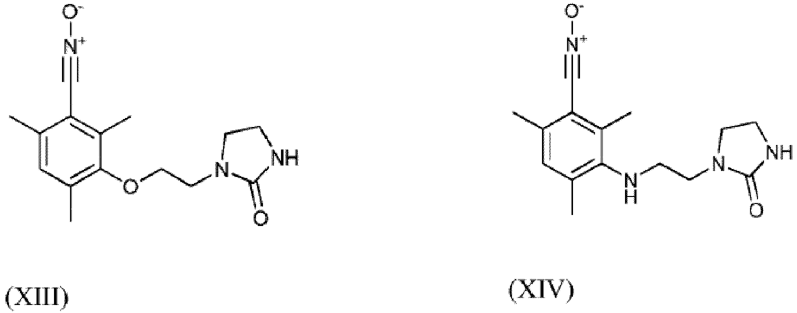 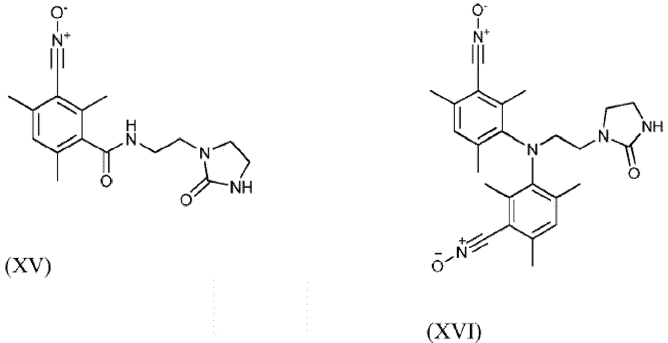 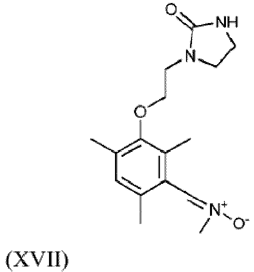 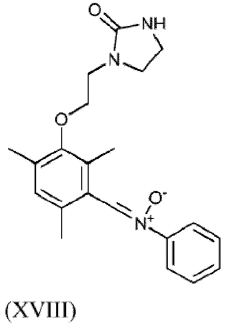 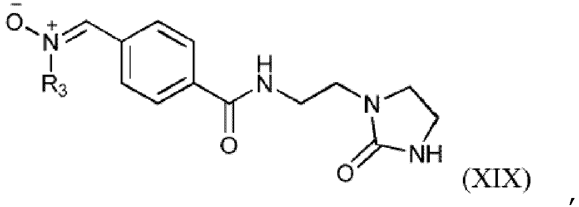 R3 für ein Wasserstoffatom, eine gerade oder verzweigte C1-C20-Alkylgruppe, eine gerade oder verzweigte C3-C20-Cykloalkylgruppe, eine gerade oder verzweigte C6-C20-Arylgruppe und eine Gruppe der Formel (X) 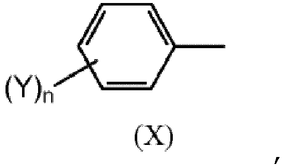 in der n für 1, 2, 3, 4 oder 5 steht und jedes Y unabhängig für eine Alkylgruppe oder ein Halogenid steht, steht.

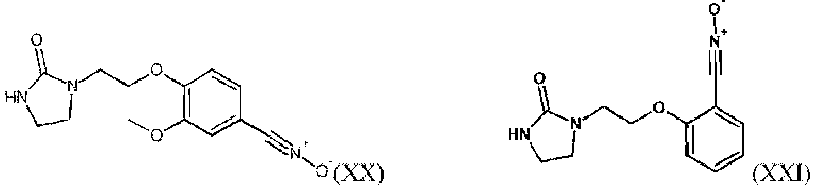

9. Schwerlastreifen nach einem der Ansprüche 1 bis 6, **dadurch gekennzeichnet, dass** das Modifizierungsmittel aus den folgenden Verbindungen der Formel (XXII) und (XXIII) ausgewählt ist:

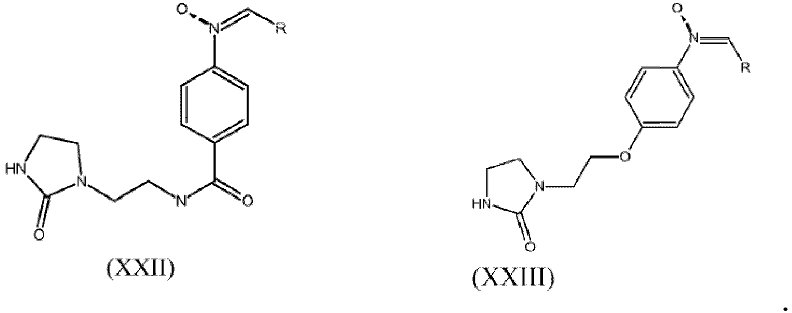

10. Schwerlastreifen nach einem der Ansprüche 1 bis 9, **dadurch gekennzeichnet, dass** die Kautschuk-Zusammensetzung höchstens 10 pce eines Weichmachers umfasst.

11. Schwerlastreifen nach einem der Ansprüche 1 bis 9, **dadurch gekennzeichnet, dass** die Elastomer-Matrix aus gepfropftem synthetischem Polyisopren als einzigem Elastomer besteht.

12. Schwerlastreifen nach einem der Ansprüche 1 bis 9, **dadurch gekennzeichnet, dass** die Elastomer-Matrix mindestens ein anderes, gepfropftes oder nichtgepfropftes, Dien-Elastomer umfasst.

13. Schwerlastreifen nach einem der vorhergehenden Ansprüche, **dadurch gekennzeichnet, dass** das chemische Vernetzungsmittel 0,5 bis 12 pce Schwefel, vorzugsweise 1 bis 10 pce Schwefel, oder 0,01 bis 10 pce von einer oder mehreren Peroxidverbindungen umfasst.

14. Schwerlastreifen nach einem der vorhergehenden Ansprüche, **dadurch gekennzeichnet, dass** der Anteil an Modifizierungsmittel von 0,01 Mol-% bis 50 Mol-%, vorzugsweise von 0,01 Mol-% bis 5 Mol-%, variiert.

15. Verfahren zur Herstellung eines Schwerlastreifens, umfassend den Schritt der Herstellung der Kautschuk-Zusammensetzung für die Lauffläche, der die folgenden Schritte umfasst:
- Modifizieren des synthetischen Polyisoprens durch Pfropfung eines Modifizierungsmittels, das mindestens eine Gruppe Q und mindestens eine Gruppe A umfasst, die miteinander durch mindestens und vorzugsweise eine "Spacer"-Gruppe Sp verbunden sind, worin:
- Q einen Dipol umfasst, der mindestens und vorzugsweise ein Stickstoffatom enthält,
- A eine assoziative Gruppe umfasst, die mindestens ein Stickstoffatom umfasst,
- Sp ein Atom oder eine Gruppe von Atomen ist, das/die eine Verbindung zwischen Q und A bildet/bilden,
- Einbringen eines verstärkenden Füllstoffs in das derart durch das Modifizierungsmittel gepfropfte synthetische Polyisopren durch thermisch-mechanisches Verkneten des Ganzen, auf einmal oder in mehreren Malen, bis eine maximale Temperatur zwischen 110°C und 200°C erreicht ist,
- Abkühlen des Ganzen auf eine Temperatur unter 100°C,
- danach Einbringen des chemischen Vernetzungsmittels,
- Verkneten des Ganzen bis auf eine maximale Temperatur unter 120°C,
- Extrudieren der so erhaltenen Kautschuk-Zusammensetzung, um ein Profil für die Lauffläche zu formen,
- Zusammenfügen der verschiedenen Halbzeuge des Reifens, darunter die zuvor geformte Lauffläche.

16. Verfahren zur Herstellung eines Schwerlastreifens, umfassend den Schritt der Herstellung der Kautschuk-Zusammensetzung für die Lauffläche, der die folgenden Schritte umfasst:
- bei einer Temperatur und während eines Zeitraums, dass die Pfropfungsausbeute vorzugsweise größer als 60% ist, Einbringen eines Modifizierungsmittels in das Polyisopren, das mindestens eine Gruppe Q und mindestens eine Gruppe A umfasst, die miteinander durch mindestens und vorzugsweise eine "Spacer"-Gruppe Sp verbunden sind, worin:
- Q einen Dipol umfasst, der mindestens und vorzugsweise ein Stickstoffatom enthält,
- A eine assoziative Gruppe umfasst, die mindestens ein Stickstoffatom umfasst,
- Sp ein Atom oder eine Gruppe von Atomen ist, das/die eine Verbindung zwischen Q und A bildet/bilden,
- anschließend Einbringen des verstärkenden Füllstoffs sowie sämtlicher grundlegender Bestandteile der Zusammensetzung mit Ausnahme des chemischen Vernetzungssystems durch thermisch-mechanisches Verkneten des Ganzen, auf einmal oder in mehreren Malen, bis eine maximale Temperatur zwischen 110°C und 200°C erreicht ist,
- Abkühlen des Ganzen auf eine Temperatur unter 100°C,
- danach Einbringen des chemischen Vernetzungsmittels,
- Verkneten des Ganzen bis auf eine maximale Temperatur unter 120°C,
- Extrudieren der so erhaltenen Kautschuk-Zusammensetzung, um die Lauffläche zu formen,
- Zusammenfügen der verschiedenen Halbzeuge des Reifens, darunter die zuvor geformte Lauffläche.

## Claims

1. Heavy-duty vehicle tyre comprising a tread consisting of a crosslinked rubber composition, **characterized in that** said composition is based at least on the following components:
- an elastomer matrix predominantly comprising a synthetic polyisoprene,
- a reinforcing filler predominantly comprising a reinforcing inorganic filler of siliceous type, and
- a reinforcing inorganic filler/functionalized diene elastomer bonding agent,
- a chemical crosslinker, and
- a modifier, optionally already grafted to the elastomer, selected from the compounds comprising at least one group Q, and at least one group A, which are joined to one another by at least one and preferably one "spacer" group Sp, in which:
- Q comprises a dipole containing at least one and preferably one nitrogen atom,
- A comprises an associative group comprising at least one nitrogen atom,
- Sp is an atom or group of atoms forming a bond between Q and A.

2. Heavy-duty vehicle tyre according to Claim 1, **characterized in that** A is selected from imidazolidinyl, triazolyl, triazinyl, bisureyl, ureyl and ureido-pyrimidyl groups.

3. Heavy-duty vehicle tyre according to Claim 1 or 2, **characterized in that** the group A corresponds to one of the formulae (II) to (VI) below: 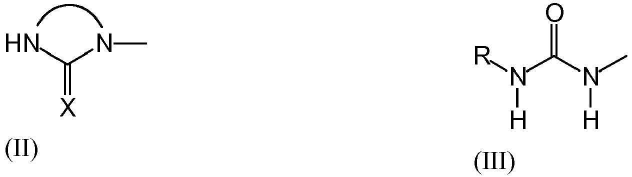 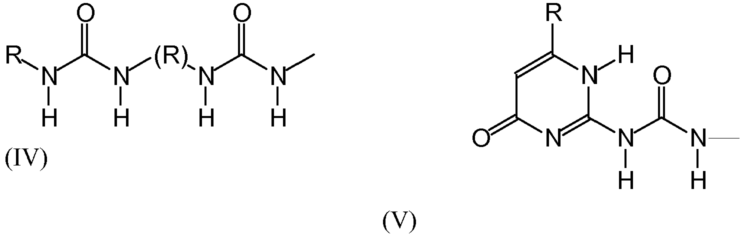 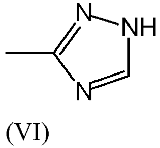 where:
- R denotes a hydrocarbon group that may optionally contain heteroatoms,
- X denotes an oxygen or sulphur atom, preferably an oxygen atom.

4. Heavy-duty vehicle tyre according to any one of Claims 1 to 3, **characterized in that** Q comprises a nitrile oxide, nitrone or nitrile imine function.

5. Heavy-duty vehicle tyre according to any one of Claims 1 to 4, **characterized in that** the group Q is a group of formula (VII), (VIII) or (IX) below: 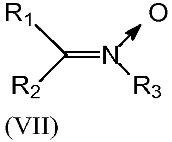
R₄-C≡N→ O (VIII)
R₅-C≡N→ N-R₆ (IX)
in which
R₁ to R₃ are selected independently from a spacer group Sp, a hydrogen atom, a linear or branched C₁-C₂₀ alkyl group, a linear or branched C₃-C₂₀ cycloalkyl group, a linear or branched C₆-C₂₀ aryl group and a group of formula (X): 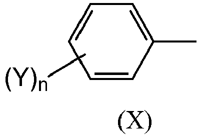 in which n represents 1, 2, 3, 4 or 5 and each Y represents independently a spacer group Sp, an alkyl group or a halide,
one at least of R₁ to R₃ denoting a spacer group Sp or a group of formula (X) in which at least one Y denotes a spacer group Sp,
- R₄ to R₅ are spacer groups Sp,
- R₆ denotes a hydrogen atom, a linear or branched C₁-C₂₀ alkyl group, a linear or branched C₃-C₂₀ cycloalkyl group, a linear or branched C₆-C₂₀ aryl group and a group of formula (X): 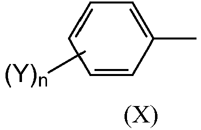 in which n represents 1, 2, 3, 4 or 5 and each Y represents independently an alkyl group or a halide.

6. Heavy-duty vehicle tyre according to any one of Claims 1 to 5, **characterized in that** the "spacer" group is a C₁-C₂₄, preferably C₁-C₁₀, linear or branched alkyl chain optionally comprising one or more heteroatoms selected from nitrogen, sulphur, silicon or oxygen atoms.

7. Heavy-duty vehicle tyre according to any one of Claims 1 to 6, **characterized in that** the group Q is a group of formula (XIa) or (XIb): 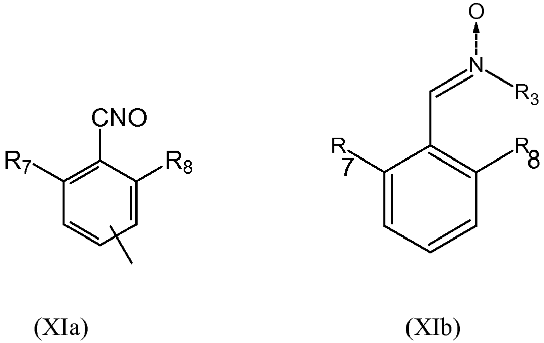 in which R₇ and R₈ represent independently a hydrogen or a C₁-C₅ alkyl group, an alkoxy or a halide, and preferably R₇ and R₈ represent independently an alkyl group or a halide, and more preferably R₇ and R₈ represent independently a methyl group or a chlorine atom, R₃ is as defined in Claim 5, and the group A is a group of formula (XII):

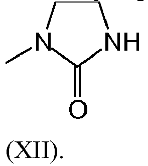

8. Heavy-duty vehicle tyre according to any one of Claims 1 to 7, **characterized in that** the modifier is selected from the compounds of formulae (XIII) to (XXI) below: 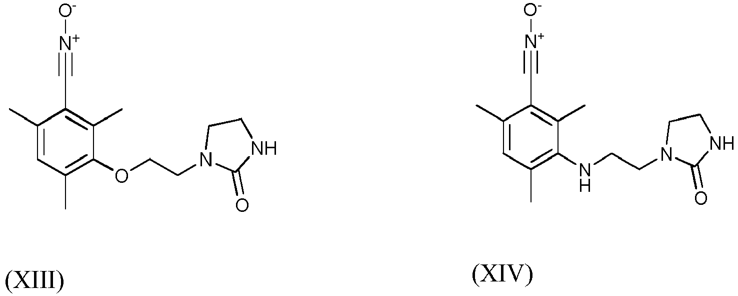 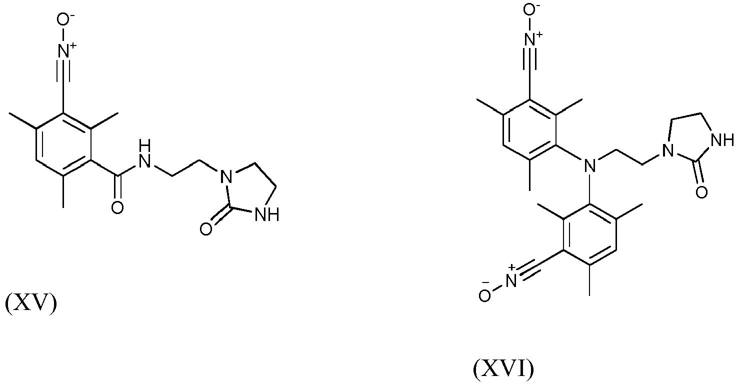 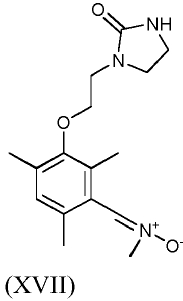 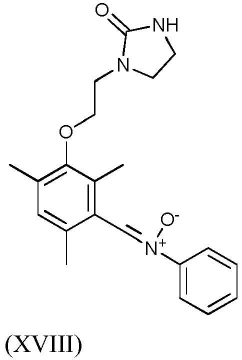 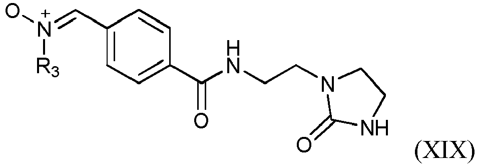 R₃ denotes a hydrogen atom, a linear or branched C₁-C₂₀ alkyl group, a linear or branched C₃-C₂₀ cycloalkyl group, a linear or branched C₆-C₂₀ aryl group and a group of formula (X): 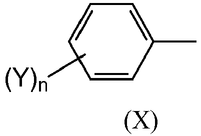 in which n represents 1, 2, 3, 4 or 5 and each Y represents independently an alkyl group or a halide.

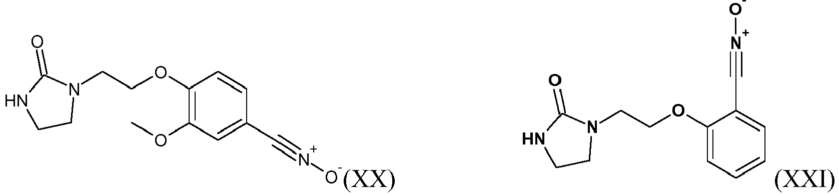

9. Heavy-duty vehicle tyre according to any one of Claims 1 to 6, **characterized in that** the modifier is selected from the compounds of formulae (XXII) and (XXIII) below:

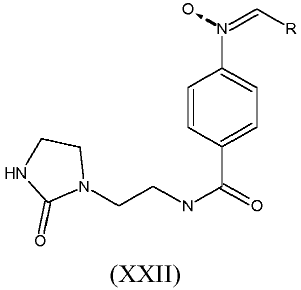

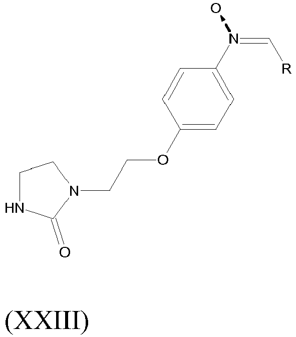

10. Heavy-duty vehicle tyre according to any one of Claims 1 to 9, **characterized in that** the rubber composition comprises at most 10 phr of a plasticizer.

11. Heavy-duty vehicle tyre according to any one of Claims 1 to 9, **characterized in that** the elastomer matrix consists of grafted synthetic polyisoprene as sole elastomer.

12. Heavy-duty vehicle tyre according to any one of Claims 1 to 9, **characterized in that** the elastomer matrix comprises at least one other grafted or ungrafted diene elastomer.

13. Heavy-duty vehicle tyre according to any one of the preceding claims, **characterized in that** the chemical crosslinker comprises 0.5 to 12 phr of sulphur, preferably 1 to 10 phr of sulphur, or 0.01 to 10 phr of one or more peroxide compounds.

14. Heavy-duty vehicle tyre according to any one of the preceding claims, **characterized in that** the proportion of modifier varies from 0.01 mol% to 50 mol%, preferably from 0.01 mol% to 5 mol%.

15. Process for manufacturing a heavy-duty vehicle tyre comprising the step of preparing the rubber composition of the tread, which comprises the following steps:
- modifying synthetic polyisoprene by grafting a modifier comprising at least one group Q, and at least one group A, which are joined to one another by at least one and preferably one "spacer" group Sp, in which:
- Q comprises a dipole containing at least one and preferably one nitrogen atom,
- A comprises an associative group comprising at least one nitrogen atom,
- Sp is an atom or group of atoms forming a bond between Q and A,
- incorporating a reinforcing filler into the synthetic polyisoprene thus grafted with the modifier, by thermomechanically kneading everything, in one or more steps, until a maximum temperature of between 110°C and 200°C is reached,
- cooling the combined mixture to a temperature of less than 100°C,
- then incorporating the chemical crosslinker,
- kneading everything up to a maximum temperature of less than 120°C,
- extruding the resulting rubber composition in order to obtain a profiled element for a tread,
- assembling the various semi-finished elements that make up the tyre, including the tread formed above.

16. Process for manufacturing a heavy-duty vehicle tyre comprising the step of preparing the rubber composition of the tread, which comprises the following steps:
- incorporating into the polyisoprene, at a temperature and for a time such that the grafting efficiency is preferably greater than 60%, a modifier comprising at least one group Q, and at least one group A, which are joined to one another by at least one and preferably one "spacer" group Sp, in which:
- Q comprises a dipole containing at least one and preferably one nitrogen atom,
- A comprises an associative group comprising at least one nitrogen atom,
- Sp is an atom or group of atoms forming a bond between Q and A,
- subsequently incorporating the reinforcing filler, and also all the base constituents of the composition, with the exception of the chemical crosslinking system, by thermomechanically kneading everything, in one or more steps, until a maximum temperature of between 110°C and 200°C is reached,
- cooling the combined mixture to a temperature of less than 100°C,
- then incorporating the chemical crosslinker,
- kneading everything up to a maximum temperature of less than 120°C,
- extruding the resulting rubber composition in order to form the tread,
- assembling the various semi-finished elements that make up the tyre, including the tread formed above.
